# EUROPÄISCHE PATENTSCHRIFT

(11) **EP 2 913 149 B1**
(45) Veröffentlichungstag und Bekanntmachung des Hinweises auf die Patenterteilung: **05.08.2020**
(21) Anmeldenummer: 15000964.5
(22) Anmeldetag: 15.04.2010
(51) Int. Cl.: B24C 9/00, B24C 11/00

(54) **STRAHLVERFAHREN UND -VORRICHTUNG**
ABRASIVE BLASTING PROCESS AND DEVICE
PROCÉDÉ ET DISPOSITIF DE ABRASION PAR JET

(43) Veröffentlichungstag der Anmeldung: 02.09.2015
(62) Teilanmeldung aus: 10003976.7
(73) Patentinhaber: Kompoferm GmbH, 33428 Marienfeld (DE)
(72) Erfinder: Halstenberg, Jörg, 32549 Bad Oeynhausen (DE)
(74) Vertreter: Schober, Mirko

(56) Entgegenhaltungen:
- EP-A1- 0 612 585
- WO-A2-2009/016448
- US-A- 5 591 064
- US-A- 5 827 114

## Beschreibung

Die Erfindung betrifft ein Strahlverfahren.

Strahlverfahren sind aus dem Stand der Technik bekannt. Ihnen gemeinsam ist, dass ein Mittel zur mechanischen Bearbeitung von Oberflächen (in Folgenden auch: eigentliches Strahlmittel), bei dem es sich in der Regel um ein granulares Material handelt, auf eine zu strahlende Oberfläche geschossen wird. Unter granularem Material ist ein granulares Material im weitesten Sinne zu verstehen, d.h. ein Material, das aus Partikeln mit einer definierten Größenverteilung besteht, wobei auch symmetrisch geformte Partikel, beispielsweise Kugeln, im Folgenden als granulares Material zu verstehen sind. Die Form, die Größenverteilung und das Material, aus dem die Granulate bestehen, werden dabei entsprechend dem Material des zu bearbeitenden Werkstücks und dem gewünschten Effekt des Strahlvorgangs auf das Werkstück ausgewählt. Zweck des Verfahrens kann es sein, eine Oberfläche von einer Altbeschichtung zu befreien, eine Oberfläche auf ein erneutes Lackieren vorzubereiten oder aber auch die Oberfläche zu polieren oder ihre mechanischen Eigenschaften zu verbessern.

Dementsprechend werden zum Beispiel häufig kantige granulare Materialien als Strahlmittel gewählt, wenn der Verfahrenszweck ein Materialabtrag von der Oberfläche oder eine Aufrauhung der Oberfläche ist oder runde granulare Materialien gewählt, wenn die Oberfläche poliert oder ihre mechanischen Eigenschaften verbessert werden sollen, beispielsweise beim sogenannten Kugelstrahlen. Prinzipiell ist jedoch auch ein Materialabtrag mit dem Einsatz von runden granularen Materialien möglich.

Als Strahlmittel kommen eine Vielzahl von Materialien, beispielsweise Stahl, Guss, Korund, Glas, Granatsand, allerdings - je nach Anwendungszweck - auch exotischere Stoffe wie zerkleinerte Nussschalen zum Einsatz. Die Körnung schwankt dabei typischerweise zwischen 0,1 und 3 mm.

Problematisch bei herkömmlichen Strahlverfahren sind Werkstücke, die an ihren zu strahlenden Oberflächen Fette, Öle, Silikonölschichten, Trennmittelrückstände oder ähnliche Substanzen aufweisen. Da das Strahlmittel in Strahlanlagen typischerweise in einem Kreisprozess geführt und wiederverwendet wird, kommt es bei solchen Werkstücken zu einer Anreicherung der Verunreinigungen im Strahlmittel, was einen erhöhten Reinigungsaufwand der Strahlanlage und des Strahlmittels verursacht. Aus diesem Grund wird häufig eine Vorreinigung der Werkstücke vom Strahlanlagenherstellern vorgeschrieben, welche aufgrund der verwendeten Lösungsmittel erhebliche Gesundheits- und Umweltrisiken beinhaltet und dementsprechend zusätzliche Kosten verursacht.

Bei dem in US 5,827,114 offenbarten Nassstrahlverfahren befindet sich lediglich ein granulares Mittel zur Bearbeitung von Oberflächen in einem flüssigen Trägermedium.

Aus WO 2009/016448 A2 ist eine Strahlvorrichtung zum Reinigen von Oberflächen bekannt.

Die US 5,591,064 A offenbart eine Vorrichtung und ein Verfahren zum Strahlen von Oberflächen, bei dem es möglich ist, unterschiedliche Abrasivstoffe während des Strahlvorgangs zusammen zu mischen. Hierfür wird eine spezielle Strahldüse verwendet. Dies ermöglicht es zwar, auch stark verschmutzte empfindliche Oberflächen zufriedenstellend zu reinigen, ohne diese zu beschädigen, das vorstehend beschriebene Problem der nachhaltigen Verschmutzung des Strahlmittels besteht jedoch weiterhin. Ein ähnliches Verfahren ist aus EP 0 612 585 A1 bekannt, bei dem zwei unterschiedliche Mittel zur mechanischen Bearbeitung von Oberflächen in einem Strahlverfahren verwendet werden. Diese werden im Kreislauf geführt und dabei in einer Trenneinrichtung wieder sortenrein getrennt, so dass praktisch zwei Strahlmittelkreisläufe für die unterschiedlichen Mittel zur mechanischen Bearbeitung von Oberflächen entstehen. Hierbei ist es möglich, das Mischungsverhältnis beider Mittel jederzeit frei zu wählen.

Der Erfindung liegt daher die Aufgabe zugrunde, ein Strahlverfahren anzugeben, welches bei der Bearbeitung von Werkstücken, welche die oben beschriebenen Verunreinigungen aufweisen, effizienter, umweltfreundlicher und gesundheitssowie sicherheitstechnisch unbedenklich ist.

Gelöst wird die Aufgabe durch ein Strahlverfahren nach den Ansprüchen 1 bis 6 . Die Unteransprüche betreffen vorteilhafte Ausführungsformen.

Erfindungsgemäß wird ein Strahlmittel verwendet, das neben wenigstens einem Mittel zur mechanischen Bearbeitung von Oberflächen (im Folgenden: eigentliches Strahlmittel) ein Additiv enthält, welches für die Entfettung und Reinigung der zu strahlenden Oberfläche und des Strahlmittels zuständig ist. Erfindungsgemäß ist das Additiv dabei ebenfalls ein granulares Material. Vorzugsweise weist das Additiv unter den mechanischen Beanspruchungen, denen das Strahlmittel während des Strahlverfahrens unterliegt, eine geringere Bruchfestigkeit aufweist als das eigentliche Strahlmittel selbst. Dabei ist unter Bruchfestigkeit die Fähigkeit der Granulate, beim Auftreffen auf die zu strahlende Oberfläche mit einer für das Strahlverfahren typischen Aufprallgeschwindigkeit nicht zu zerbrechen, zu verstehen.

Besonders vorteilhaft ist die erfindungsgemäße Verwendung des Additivs bei der Verwendung von Stahl- oder Gussperlen als eigentlichem Strahlmittel, da diese selbst nur einen minimalen Eigenabrieb aufweisen.

Dies hat zur Folge, dass während des Strahlverfahrens und des Transportes des Strahlmittels innerhalb der Anlage, beispielsweise über Transportschnecken oder Becherwerke, was die Granulate des eigentlichen Strahlmittels typischerweise unbeschadet überstehen, die Granulate des Additivs zerkleinert werden. Durch die Zerkleinerung erhöht sich die relative Oberfläche des Additivs um ein Vielfaches, so dass der weitaus größte Teil der an der Oberfläche des Werkstücks vorhandenen Verunreinigungen nicht an den Granulaten des eigentlichen Strahlmittels, sondern an den zerkleinerten Granulaten des Additivs haften bleibt. Die zerkleinerte Fraktion kann so in einfacher Weise durch ein partikelgrößenselektives Trennverfahren aus der Strahlmittelmischung entfernt werden, wodurch die Verunreinigungen in einfacher Weise aus dem Prozess ausgeschleust werden können. Dies kann beispielsweise durch Windsichten oder die Verwendung klassierender Zyklonabscheider erfolgen, bei welchen die Strahlmittelmischung in eine Fraktion, die im Wesentlichen das eigentliche Strahlmittel und noch unzerkleinerte Bestandteile des Additivs enthält, und eine Fraktion, welche die mit den Verunreinigungen belasteten zerkleinerten Bestandteile des Additivs sowie weitere feinkörnige Verunreinigungen, wie beispielsweise Abrieb von Werkstück- oder den Granulaten des eigentlichen Strahlmittels enthält, aufgeteilt wird. Während die erste Fraktion typischerweise dem Strahlverfahren wieder zugeführt wird, wird die zweite Fraktion beispielsweise in Filtern abgeschieden und kann einem zweckmäßigen Entsorgungsprozess zugeführt werden.

Da das Additiv bei diesen Verfahren aufgebraucht wird, nimmt bei der für Strahlanalgen typischen Kreislaufführung des Strahlmittels der Anteil des Additivs im Strahlmittel stetig ab. Daher ist es vorteilhaft, eine Vorrichtung zur dosierten Zuführung des Additivs vorzusehen, wobei die dosierte Zuführung vorteilhafterweise derart gesteuert wird, dass das Mengenverhältnis zwischen Additiv und dem eigentlichen Strahlmittel in dem im Kreislauf geführten Strahlmittel möglichst geringen Schwankungen unterliegt, idealerweise konstant bleibt.

Besonders vorteilhaft erweist sich der Einsatz des erfindungsgemäßen Strahlverfahrens in Verbindung mit Schleuderradstrahlanlagen. Bei dieser Bauform der Strahlanlage wird das Strahlmittel nicht durch einen Luftstrom beschleunigt, wie es in einem Großteil der Strahlanlagen üblich ist, sondern die Granulate werden durch an einem rotierenden Rad angebrachte Flächen beschleunigt und gegen das Werkstück geschossen. Bei diesem Verfahren besteht bereits beim Auftreffen der Granulate auf die Flächen des Schleuderrads eine Prallbeanspruchung der Granulate, wodurch bereits vor dem Auftreffen auf das Werkstück eine Teilzerkleinerung des Additivs erfolgt.

Als Additiv eignen sich erfindungsgemäß alle jene Materialien, die als Granulate im eingangs beschriebenen Sinn vorliegen und eine geringe Bruchfestigkeit, zumindest eine geringere als das eigentliche Strahlmittel, unter den Bedingungen aufweisen, die beim Aufprall der Granulate auf die zu strahlende Oberfläche herrschen.

Dabei kommen auch an sich harte Materialien in Frage, wenn diese aufgrund ihrer Sprödigkeit bei der beim Strahlverfahren auftretenden Prallbeanspruchung leichter zerbrechen als die Granulate des eigentlichen Strahlmittels, wenn diese eine höhere Duktilität aufweisen. So kommen als Additiv beispielsweise Salze oder Oxide in Frage, von denen besonderes das Siliziumoxid insbesondere in der natürlich vorkommenden Form des Perlitgesteins geeignet ist.

Vorteilhaft sind ebenfalls Additive, deren Granulate selbst poröse Festkörper sind, d.h. ein granulares Material, das eine innere Porosität aufweist. Durch die innere Porosität findet zum Einen eine mechanische Schwächung der Granulate statt, zum Anderen wirkt sich die innere Porosität vorteilhaft bei der Erzeugung einer möglichst großen Oberfläche durch den Partikelbruch aus. Als besonders vorteilhaft erweist sich hier die Verwendung geblähten Perlitgesteins, welches sich dadurch auszeichnet, dass während des Blähvorgangs im Perlitgestein enthaltenes Kristallwasser eine innere Porosität in den Granulaten des Perlitgesteins erzeugt.

Neben einem günstigen Preis weist das Perlitgestein weitere Merkmale auf, die bei der Auswahl des eigentlichen Strahlmittels und des passenden Additivs vorteilhaft sind. So ist es gesundheitlich unbedenklich, nicht umweltschädlich und kann keine Staubexplosion verursachen. Insbesondere beim Einsatz von Trenngeräten wie Sichtern und/oder Zyklonabscheidern kann Perlitgestein zur Unterdrückung der Brand- und/oder Explosionsgefahr beitragen. Es kann im zerkleinerten Zustand leicht vom übrigen benutzten Strahlmittel abgetrennt werden und weist keine das Werkstück schädigenden, beispielsweise korrosiven Eigenschaften auf. Wenn das zerkleinerte Perlitgestein durch Filter aus der Prozessabluft abgeschieden wird, trägt es zudem zur Erleichterung der Reinigung der Filter durch seine fettbindende Wirkung bei.

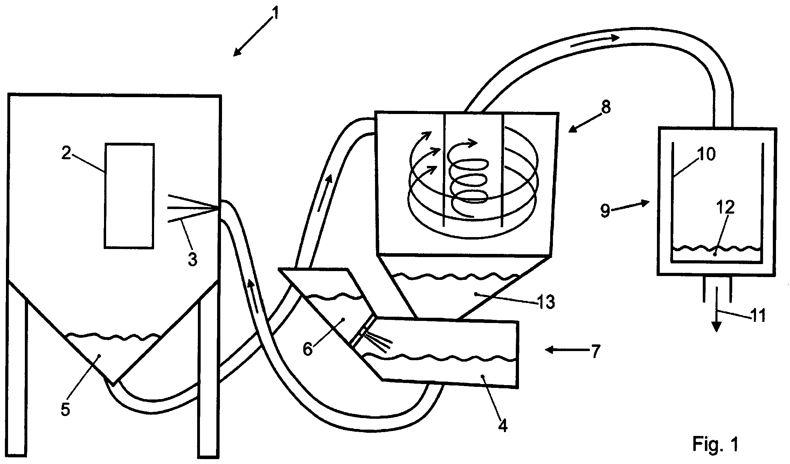

Die Erfindung wird im Folgenden anhand der Figur 1, die eine schematische Abbildung einer beispielhaften Vorrichtung zur Durchführung des erfindungsgemäßen Strahlverfahrenszeigt, schematisch näher erläutert.

Die beispielhafte Vorrichtung weist eine Strahlvorrichtung 1 auf, in der der Strahl 3 auf das Werkstück 2 trifft. Das benutzte Strahlmittel 5 wird aufgefangen und der Aufbereitungseinrichtung 8 zugeführt. In dieser wird nach dem Prinzip eine klassierenden Zyklonabscheiders oder Windsichters eine erste Fraktion 13, die im Wesentlichen das eigentliche Strahlmittel sowie den unzerkleinerten Anteil des Additivs enthält, abgeschieden und von einer zweiten Fraktion 12 getrennt, die vorzugsweise durch einen Trägerluftstrom ausgetragen wird und den zerkleinerten Anteil des Additivs sowie Abrieb von Werkstück und/oder Strahlmittel und die aus dem Prozess zu entfernenden Verunreinigungen enthält. Die zweite Fraktion 12 kann mit einem Filter aus dem Trägerluftstrom entfernt werden, von dem dann lediglich unbelastete Abluft zurückbleibt.

Erfindungsgemäß ist eine Vorrichtung 7 zum dosierten Zuführen des granularen Additivs 6 vorhanden, die dazu dient, das Additiv der im Kreislauf geführten Strahlmittel 5 zuzusetzen und vorteilhafterweise das zugesetzte Additiv derart dosiert, dass auch bei längerem Betrieb der Vorrichtung der Anteil des Additivs an der Strahlmittelmischung 5 weitestgehend konstant bleibt.

## Patentansprüche

1. Strahlverfahren, bei dem in einem Strahlvorgang ein Strahlmittel (4) auf ein Werkstück (2) gestrahlt wird, wobei das Strahlmittel wenigstens ein granulares Mittel zur mechanischen Bearbeitung von Oberflächen aufweist, wobei das benutzte Strahlmittel (5) aufgefangen und nach einem Aufbereitungsvorgang wieder dem Strahlvorgang zugeführt wird,
**dadurch gekennzeichnet,**
**dass** das Strahlmittel ein granulares Additiv (6) für die Entfettung und Reinigung der zu strahlenden Oberfläche (2) und/oder des Strahlmittels aufweist, wobei die Granulate eines Additivs (6) während des Strahlvorgangs zumindest zum Teil zerkleinert werden, wobei der zerkleinerte Anteil des Additivs während des Aufbereitungsvorgangs aus dem Kreislauf des Strahlmittels abgeschieden wird.

2. Strahlverfahren nach Anspruch 1,
**dadurch gekennzeichnet,**
**dass** dem Kreislauf des Strahlmittels (4) das Additiv (6) zugeführt wird, wobei vorzugsweise das Mengenverhältnis zwischen Additiv (6) und Strahlmittel im Kreislauf des Strahlmittels (4) durch eine Regelung konstant gehalten wird.

3. Strahlverfahren nach einem der Ansprüche 1 oder 2,
**dadurch gekennzeichnet,**
**dass** das Strahlmittel Stahl- oder Gussperlen als Mittel zur mechanischen Bearbeitung von Oberflächen aufweist.

4. Strahlverfahren nach einem der Ansprüche 1 bis 3 ,
**dadurch gekennzeichnet,**
**dass** das Additiv ein granulares Material umfasst, welches unter den mechanischen Beanspruchungen, denen das Strahlmittel (4) während des Strahlverfahrens unterliegt, eine geringere Bruchfestigkeit aufweist als das mindestens eine Mittel zur mechanischen Bearbeitung von Oberflächen selbst.

5. Strahlverfahren nach einem der Ansprüche 1 bis 4,
**dadurch gekennzeichnet,**
**dass** es sich bei dem Additiv (6) um ein Salz oder ein Oxid, insbesondere um ein Siliziumoxid und/oder um Perlitgestein, insbesondere geblähtes Perlitgestein handelt.

6. Strahlverfahren nach einem der Ansprüche 1 bis 5,
**dadurch gekennzeichnet,**
**dass** es sich bei dem Additiv (6) um granulares Material handelt, dessen Granulate eine innere Porosität aufweisen.

## Claims

1. Abrasive blasting process in which an abrasive blasting medium (4) is blasted in a blasting process onto a workpiece (2) wherein the blasting medium comprises at least one granular medium for mechanically treating surfaces, wherein the blasting medium (5) used is collected up and after a recycling process is supplied again to the blasting process,
**characterised in that**
the abrasive blasting medium comprises a granular additive (6) for degreasing and cleaning the surface (2) to be blasted and/or the abrasive blasting medium, wherein the granules of an additive (6) are pulverised at least in part during the blasting process, wherein the pulverised proportion of the additive is separated during the recycling process from the circuit of the blasting medium.

2. Abrasive blasting process according to claim 1,
**characterised in that**
the additive (6) is supplied to the circuit of the abrasive blasting medium (4) wherein the volume ratio between the additive (6) and blasting medium is preferably kept constant in the circuit of the blasting medium (4) through a regulating control.

3. Blasting process according to one of claims 1 or 2
**characterised in that**
the abrasive blasting medium comprises steel or cast iron beads as the medium for mechanically treating surfaces.

4. Abrasive blasting process according to one of claims 1 to 3
**characterised in that**
the additive comprises a granular material which under the mechanical stresses to which the blasting medium (4) is subjected during the blasting process has a lower breaking strength than the at least one medium for mechanically treating the surfaces itself.

5. Abrasive blasting process according to one of claims 1 to 4
**characterised in that**
the additive (6) is a salt or an oxide, in particular a silicon oxide and/or pearlite rock, in particular inflated perlite rock.

6. Abrasive blasting process according to one of claims 1 to 5
**characterised in that**
the additive (6) is a granular material whose granules have an inner porosity.

## Revendications

1. Procédé d'abrasion par jet, dans lequel un agent abrasif (4) est projeté sur une pièce à usiner (2), sachant que l'agent contient au moins une matière granuleuse pour le traitement mécanique de surfaces, sachant que l'agent utilisé est capté et reconduit au processus d'abrasion après un traitement préparatoire,
**caractérisé en ce que**
l'agent abrasif présente un adjuvant granuleux (6) pour le dégraissement et le nettoyage de la surface (2) à abraser et/ou de l'agent abrasif, sachant que les granulés d'un adjuvant (6) sont, tout au moins partiellement, broyés pendant le processus d'abrasion, sachant que la partie broyée de l'adjuvant est éliminée du circuit d'agent abrasif pendant le processus d'abrasion.

2. Procédé d'abrasion par jet selon la revendication 1,
**caractérisé en ce que**
l'adjuvant (6) est amené dans le circuit de l'agent abrasif (4), sachant que, de préférence, la relation proportionnelle entre l'adjuvant (6) et l'agent abrasif est maintenue constante dans le circuit de l'agent abrasif (4) par une régulation.

3. Procédé d'abrasion par jet selon revendication 1 ou 2,
**caractérisé en ce que**
l'agent abrasif présente des perles d'acier ou de fonte en tant que moyen de traitement mécanique de surfaces.

4. Procédé d'abrasion par jet selon l'une des revendications 1 à 3,
**caractérisé en ce que**
l'adjuvant comprend une matière granuleuse, laquelle présente une plus faible résistance aux sollicitations mécaniques, auxquelles l'agent abrasif (4) est soumis au cours du processus d'abrasion, que celle de l'au moins un moyen de traitement mécanique de surfaces.

5. Procédé d'abrasion par jet selon l'une des revendications 1 à 4,
**caractérisé en ce que**,
quant à l'adjuvant (6), il s'agit là d'un sel ou d'un oxyde, en particulier d'un oxyde de silicium et/ou de roche perlite, en particulier de roche perlite expansée.

6. Procédé d'abrasion par jet selon l'une des revendications 1 à 5,
**caractérisé en ce que**,
quant à l'adjuvant (6), il s'agit là d'une matière granuleuse, dont les granulés présentent une porosité intérieure.
